# EUROPEAN PATENT APPLICATION

(11) **EP 2 774 478 A1**
(43) Date of publication of application: **10.09.2014**
(21) Application number: 13158235.5
(22) Date of filing: 07.03.2013
(51) Int. Cl.: A01G 9/24

(54) **System and method for dehumidifying greenhouse air**

(71) Applicant: Nederlandse Organisatie voor toegepast- natuurwetenschappelijk onderzoek TNO, 2628 VK Delft (NL)
(72) Inventor: van Wolferen, Johannes, 2628 VK Delft (NL); ter Steeg, Robertus Theodorus Martinus, 2628 VK Delft (NL); Hammink, Hendrik Arie Johan, 2628 VK Delft (NL); Wissink, Edo B., 2628 VK Delft (NL)
(74) Representative: Jansen, Cornelis Marinus

(57) **Abstract**

A system (200) for dehumidifying greenhouse air, comprising:
• at least one local dehumidifying unit (210), comprising:
○ a main air channel (213) including a primary air channel section (214), a secondary air channel section (216), and a tertiary air channel section (218);
○ an air pump (228) that is arranged inside the main air channel (213) and configured to effect a flow of greenhouse air therethrough;
○ a main water channel (231);
○ a heat exchanger (212) in which said primary and tertiary air channel sections (214, 218) are arranged in heat exchanging contact;
o an air-water interfacer (230) in which said secondary air channel section (216) and said main water channel (231) are in fluid communication; and

• a common water supply unit (240) configured to provide for a flow of cooling-water to the at least one local dehumidifier (210).

## Description

### Field of the invention

The present invention relates to a system and a method for dehumidifying greenhouse air, and to a greenhouse equipped with a such a system.

### Background

To achieve optimal plant growth in a greenhouse, it is necessary to maintain an indoor climate that reflects the optimal conditions for plant growth as closely as possible. These conditions relate in particular to air humidity, temperature, carbon dioxide level. In recent years, the development of greenhouse climate control systems has focussed on closed systems. Such systems allow for the dehumidification of air, necessary to prevent plant diseases, without exchanging air with the typically cold outside environment of the greenhouse. Keeping greenhouse air within the greenhouse makes it more economical to maintain an optimal temperature and carbon dioxide level inside.

WO 2007/101,914-A1 (Haukioja et al.) discloses such a closed system and method for dehumidifying greenhouse air. The system comprises water distribution means, e.g. sprinklers, by means of which water cooler than the dewpoint temperature of the greenhouse can be sprayed directly into the greenhouse air space. Water sprayed into the air space is allowed to fall as drops, while humidity in the greenhouse air is allowed to condense onto the drops. Finally, the drops are collected by water collection devices and discharged from the greenhouse.

### Summary of the invention

The system of WO'914 entails a number of drawbacks. Firstly, it is rather spacious. Consequently, it takes up a lot of precious greenhouse floor area, and it is likely to hamper access to the plants by the grower. Secondly, the proposed dehumidification process not only involves drying the air, but also cooling it. This is because the dehumidification process extracts both latent and sensible heat from the air. The cooling of the air may typically be an undesired effect with an eye to maintaining an indoor temperature optimal for plant growth, which means that new heat may have to be generated - e.g. by burning fossil fuels - and supplied to the greenhouse. Thirdly, the mass/heat-transferring contact between the greenhouse air and the falling water drops is sub-optimal. For one, the water drops used in the process need to be large enough to fall down (if they would small enough to be suspended in the air, they would contribute to its humidification instead of dehumidification). As a result, their mass/heat-exchanging surface area is relatively small compared to their volume. Furthermore, the system and method of WO'914 are based on the deliberate decision not to employ fans, but to rely on the intrinsic movement of air in the greenhouse instead. In the context of WO'914, the movement of the air is largely due to the cooling of greenhouse air at the 'open sprinkler condensers'. However, not only may such cooling generally be undesirable (as just mentioned), to effect an air flow that warrants a continuous supply flow of fresh humid air towards the sprinklers, massive amounts of cooling-water may be necessary. Continuously displacing and cooling the water, which would be required in many geographical regions, is obviously rather costly both in cost for equipment and costs of operation.

It is an object of the present invention to provide for an energy efficient system and a corresponding method for dehumidifying greenhouse air, which overcome or mitigate one or more of the aforementioned drawbacks.

To this end, a first aspect of the present invention is directed to a system for dehumidifying greenhouse air. The system may comprise at least one local dehumidifying unit. The dehumidifying unit may comprise an air channel network including main air channel that extends from an air inlet to an air outlet, and that successively - i.e. seen in the downstream direction, from the air inlet to the air outlet - includes a primary air channel section, a secondary air channel section, and a tertiary air channel section. The dehumidifying unit may further comprise an air pump that is arranged inside the main air channel and configured to effect a flow of greenhouse air therethrough. The dehumidifying unit may also comprise a water channel network including a main water channel that extends from a water inlet to a water outlet, and that includes a primary water channel section. Furthermore, the dehumidifying unit may comprise a heat exchanger in which said primary and tertiary air channel sections are arranged in heat exchanging contact, and a air-water interfacer in which said secondary air channel section and said primary water channel section are in fluid communication. The system may also comprise a common water supply unit configured to provide for a flow of cooling-water, and including at least one cooling-water outlet that is operably connected to the water inlet of the at least one local dehumidifier.

A second aspect of the present invention is directed to a method for dehumidifying greenhouse air. The method may comprising, at a dehumidifying location in a green house, effecting a local flow of greenhouse air along a (local) main air flow path extending from an air flow path starting point located inside the green house to an air flow path end point located inside the greenhouse, and, in between said air flow path starting and end points, successively including a primary air flow path section, a secondary air flow path section, and a tertiary air flow path section. Greenhouse air flowing along the primary air flow path section may be in heat exchanging contact with air flowing along the tertiary air flow path section. The method may also comprise, at said dehumidifying location, effecting a flow of cooling-water along a (local) main water flow path defining an air-water interface region where cooling-water flowing along the main water flow path is in fluid exchanging contact with greenhouse air flowing along the secondary air flow path section.

The presently disclosed system and method form an energy efficient, closed greenhouse dehumidifying solution. The solution enables the local dehumidification of greenhouse air at spaced apart dehumidifying locations within a greenhouse by locally, actively circulating greenhouse air into intense fluid exchanging contact with cooling water (over a large mass (and thus heat) exchanging contact surface). The circulation of greenhouse air at the various dehumidifying locations may remain confined to within the greenhouse so that no warm air, including carbon dioxide (CO₂), is lost to the environment. Furthermore, no large volumes of air need to be displaced over large distances, e.g. to a central dehumidifying location; instead, comparatively small volumes of cooling-water may be supplied to each of the various local dehumidifying locations from a central water cooling location. Cooling the cooling-water centrally instead of locally allows the overall required cooling to be performed more efficiently, and additionally reduces the size and manufacturing costs of local dehumidifying units. Compact, local dehumidifying units may also enable improved control over the temperature and humidity stratification within the greenhouse. In addition, the presently proposed solution diminishes the aforementioned undesired cooling of greenhouse air by recovering sensible heat through a heat exchange process before/after the humid greenhouse air is brought into fluid exchanging contact with the cooling-water.

These and other features and advantages of the invention will be more fully understood from the following detailed description of certain embodiments of the invention, taken together with the accompanying drawings, which are meant to illustrate and not to limit the invention.

### Brief description of the drawings

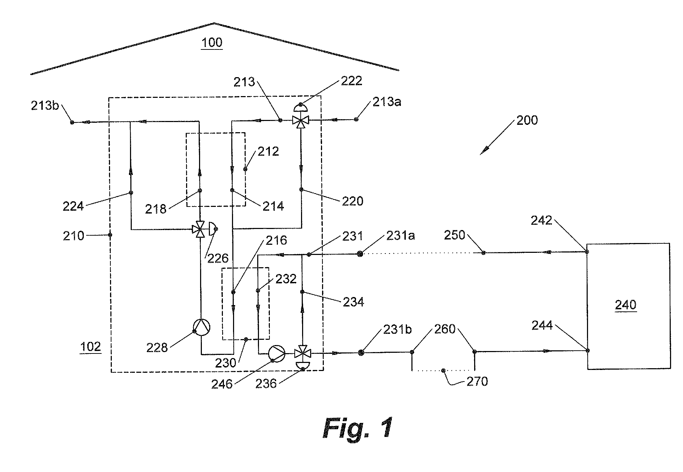

Fig. 1 schematically illustrates an exemplary embodiment of a system for dehumidifying greenhouse air according to the present invention.

### Detailed description

Fig. 1 schematically illustrates a system 200 for dehumidifying greenhouse air in a greenhouse 100. The system 200 may comprise a common water supply unit 240, and at least one local dehumidifying unit or dehumidifier 210 that is operably connected thereto.

The common water supply unit 240 may serve to supply the at least one local dehumidifying unit 210 connected thereto with cooling-water having a temperature below a dewpoint of the greenhouse air inside the greenhouse 100. It may typically be disposed outside of the greenhouse 100, e.g. next to it, so as not to occupy valuable greenhouse floor area. The at least one dehumidifying unit 210, which serves to locally dehumidify greenhouse air, may be disposed at a respective dehumidifying location 102 within the greenhouse 100. In case the system 200 includes a plurality of dehumidifying units 210, the units 210 may be scattered throughout the greenhouse 100 and be arranged at mutually spaced apart dehumidifying locations 102. A typical minimum distance between any two dehumidifying units 210/dehumidifying locations 102 may be on the order of several meters, e.g. five or ten meters.

The at least one dehumidifying unit 210 may include a heat exchanger 212, an air-water interfacer 230, and piping and instrumentation to run cooling-water and/or greenhouse air therethrough.

The heat exchanger 212 may serve to limit heat loss suffered by greenhouse air that is circulated through the dehumidifying unit 210, in particular by pre-cooling and post-warming greenhouse air before and after, respectively, it is run through the air-water interfacer 230. Some embodiments of the unit 210 may enable air to be channelled around instead of through the heat exchanger 212 when cooling of the greenhouse air is in fact desired, e.g. on warm days.

The air-water interfacer 230 serves to bring optionally pre-cooled air - i.e. air run through the heat exchanger 212 - into fluid exchanging contact with cooling-water supplied by the common water supply unit 240, so as to condense water vapor present in the greenhouse air and to entrain the condensate in the flow of cooling-water.

The piping scheme of the dehumidifying unit 210 may include an air channel network for channelling air through the unit. The air channel network may define a main air channel or conduit 213, which may extend from an air inlet 213a to an air outlet 213b. The air inlet 213a may serve to let humid greenhouse air from the greenhouse 100 into the dehumidifying unit 210, while the air outlet 213b may serve to discharge dehumidified greenhouse air from the dehumidifying unit 210 back into the greenhouse 100. Both the air inlet 213a and the air outlet 213b may thus be externally arranged on the dehumidifying unit 210.

The main air channel 213 may include three functionally distinguishable sections that are connected in succession (i.e. successively, seen in the downstream direction) in between the air inlet 213a and the air outlet 213b: a primary 214, a secondary 216 and a tertiary 218 air channel section. The primary and tertiary air channel sections 214, 218 may both run, at least partially, through the heat exchanger 212 such that they are in heat exchanging contact. The heat exchanger 212 may preferably be a counter-flow heat exchanger wherein the primary and tertiary air channel sections 214, 218 may run antiparallel. In alternative embodiments, however, the heat exchanger 212 may be of a different type, e.g. be a cross-flow heat exchanger, such that the primary and tertiary air channels 214, 218 may have a different mutual arrangement. The secondary air channel section 216, which extends in between the primary and tertiary air channel sections 214, 218, may run, at least partially, through the air-water interfacer 230 (discussed below).

In one embodiment of the dehumidifying unit 210, the air channel network may, besides the main air channel 213, include one or more bypasses that initially branch off from and eventually merge with the main air channel. The bypasses may in particular enable a flow of greenhouse air through the main air channel 213 to be completely or partly channelled around instead of through the heat exchanger 212 by bypassing the primary and/or tertiary air channel sections 214, 218 thereof. Having a flow greenhouse air bypass the heat exchanger 212 will typically cause the dehumidifying unit 210 to discharge cooler air back into the greenhouse 100, which may be desired when the temperature inside the greenhouse is too high. To enable bypassing of the heat exchanger 212, the unit's air channel network may, for instance, include a first bypass 220 that bypasses the primary air channel section 214 and/or a second bypass 224 that bypasses the tertiary air channel section 218. Either bypass 220, 224 may be associated with one or more respective control valves to alternatively direct the flow of air complete or partially through the respective bypassed air channel section 214, 218 and its respective bypass 220, 224. As in the depicted embodiment, a control valve may include a three-way valve 222, 226 via which an upstream or downstream end of the respective bypass 220, 224 is connected to the main air channel 213.

It is noted that an air channel network that enables both the primary and the tertiary air channel sections 214, 218 to be bypassed may be preferred. This is because a heat exchanger 212 may typically involve a rather significant air flow resistance. And although providing a single bypass around either the primary 214 or the tertiary 218 air channel section may already result in both better cooling of the flow of greenhouse air and a decrease in flow resistance, an optimal reduction of the flow resistance may be realized only when the heat exchanger 212 is bypassed completely.

It is noted that the heat changer 212 may include a condensate outlet (not shown). The condensate outlet may be operably connected to the primary air channel section 214 (without forming part of the air channel network), to enable the discharge of condensate from the primary air channel section 214/the heat exchanger 212.

To drive a flow of greenhouse air through the air channel network, the latter may also include an air pump 228. In this text, the term 'air pump' may be construed broadly to include any air flow effecting device, such as economical ventilators, fans and the like. The air pump 228 may in principle be arranged at any point in the main air channel 213. In a preferred embodiment, however, the air pump 228 may be arranged between the primary and tertiary air channel sections 214, 218, i.e. 'behind' the heat exchanger 212, which may act as a muffler to reduce turbulence and vibrations in the air flow.

The piping scheme of the dehumidifying unit 210 may further include a water channel network for channelling water through the unit. The water channel network may define a main water channel or conduit 231, which may extend from a water inlet 231a to a water outlet 231b. In between its water inlet 231a and water outlet 231b, the main water channel 231 may include a primary water channel section 232 that, at least partially, merges with the secondary air channel section 216 in the air water interfacer 230.

Within the air-water interfacer 230, the secondary air channel section 216 and the primary water channel section 232 may effectively merge, join or coincide to enable fluid communication, i.e. mass and heat exchanging contact, between humid greenhouse air flowing through the secondary air channel section 216 and cooling-water flowing through the primary water channel section 232. The cooling-water entering the air-water interfacer 230 may preferably have a temperature below the dewpoint of the greenhouse air entering the air-water interfacer 230. Consequently, contact between the cooling-water and the greenhouse air may cause the cooling of the latter below its dewpoint. This in turn may lead to condensation of water vapor held by the greenhouse air. The condensate may simply be entrained in the flow of cooling-water to be discharged. As such the proposed process of dehumidifying greenhouse air is a clean process, which renders the operation of the dehumidifying unit 210 relatively maintenance free compared to, for instance, chemical-based dehumidifiers that may typically involve the use of aggressive desiccants, such as calcium chloride.

The air-water interfacer 230 may be implemented in various ways.

In one embodiment, for example, the air-water interfacer 230 may include a packed bed, i.e. a vessel filled with a packing material, through which physical contact between the humid greenhouse air and the cooling-water may be established. The packing material may in itself be of a conventional design and for instance include randomly arranged small objects such as Raschig rings, or, alternatively, a structured packing such as thin corrugated metal or plastic plates or gauzes. The flow of cooling-water entering the air-water interfacer 230 may be dispersed across the packing material, for instance by forcing the flow through a sprayhead or nozzle, so as to ensure that it properly wets the surface of packing to provide for a maximum of mass/heat-exchanging area. The flow of humid air may be driven across/over the wetted surface of the packing to enable mass and heat transfer. As packed beds are in themselves known in the process industry, they are not elaborated upon here in further detail.

In another embodiment, the air-water interfacer 230 may be configured to atomize the flow of cooling-water, so as to create a mist of cooling-water droplets, and to pass the flow of humid greenhouse air through this mist to enable mass and heat transfer. In such an embodiment, the air-water interfacer 230, and more in particular the primary water channel section 232, may include an atomizer of any suitable type - e.g. an atomizer nozzle (through which the cooling-water must be forced under high pressure), a piezo-electric atomizer, an ultrasonic atomizer nozzle, etc. - configured to produce water droplets having an average diameter in a desired range.

The air-water interfacer 230 may preferably be configured such that, at least where greenhouse air and cooling-water are brought into contact, the flow of cooling-water (droplets) takes place in the downward direction. That is, the flow of cooling-water inside the air-water interfacer 230 may preferably be gravity driven. As a result, cooling-water that has been brought into contact with humid air (and thus includes condensate), may easily be collected at a lower/bottom side of the air-water interfacer 230, e.g. in a water receptacle or cistern. The flow of greenhouse air may typically, but not necessarily, be directed at an angle relative to the flow cooling-water. The two flows may, for instance, be substantially perpendicular.

Since the flow of cooling-water supplied by the common water supply unit 240 may typically be sufficiently pressurized, it may not be necessary for the dehumidifying unit 210 to include a water pump or compressor to drive the flow of cooling-water through its water channel network. Yet, in some embodiments the water channel network may include a water pump 246, in particular to enable the recycling of cooling-water within the dehumidifying unit 210 (discussed below) and/or to enable the discharge of cooling-water from the dehumidifying unit. In embodiments with a water receptable or cistern, the water pump 246 may be arranged inside, or in fluid communication with, that receptable to enable the pumping of water therefrom in a downstream direction. The discharge of cooling-water may, however, also be gravity driven, which could render a water pump superfluous and the dehumidifying unit more economical to manufacture. In case water pump 246 is provided for, it may preferably be arranged in the main water channel 231, at a point downstream of the air water interfacer 230.

In one embodiment of the dehumidifying unit 210, the water channel network may, besides the main water channel 231, include a loopback water channel section 234 that enables cooling-water exiting the air-water interfacer 230 to be reused. Such reuse or recycling of cooling-water may be desired when the temperature of the cooling-water upon exiting the water-air interfacer 230 is still below the dewpoint of greenhouse air entering the air-water interfacer. The loopback section 234 may branch off from the main water channel 231 at a point downstream of the air-water interfacer 230, and rejoin the main water channel 231 at a point upstream of the air water interfacer 230. It may be associated with a control valve 236, e.g. a three-way control valve, that enables the flow of cooling-water exiting the air-water interfacer 230 to be alternatively directed to the exit 231b of main water channel 231, or through the water loopback section 234. The control valve 236 may itself be controlled by a controller (not shown) that is fitted with a temperature sensor to monitor the temperature of the cooling-water exiting the air-water interfacer 230, and to adjust the valve 236 to recycle cooling-water exclusively when the monitored temperature is below a predetermined dewpoint of the greenhouse air.

As mentioned, the common water supply unit 240 may serve to supply the at least one local dehumidifying unit 210 connected thereto with a (pressurized) flow of cooling-water having a temperature below a dewpoint of the greenhouse air inside the greenhouse 100.

Irrespective of its precise implementation, the common water supply unit 240 may therefore include at least one cooling-water outlet 242, which may be operably connected to the water inlet 231a of the at least one dehumidifying unit 210 via a global (i.e. non-local) water supply channel 250. The water supply channel 250 is labelled 'global' because it may extend well beyond a single dehumidifying location 102 at which greenhouse air is locally dehumidified. The topology of the arrangement of the common water supply unit 240, the at least one dehumidifying unit 210 and the at least one global water supply channel 250 may vary between different embodiments of the system 200, in particular when the system includes a plurality of dehumidifying units 210. In such system embodiments different, spaced apart dehumidifying units 210 may advantageously share portions of a global water supply channel (instead of each unit having a dedicated global water supply channel), for instance in a line, ring or mesh topology.

The common water supply unit 240 may additionally include at least one cooling-water inlet 244, which may be operably connected to the water outlet 231b of the at least one dehumidifying unit 210 via a global (non-local) water return channel 260. It it understood that the global water supply channel 250, the water channel network of the at least one dehumidifying unit 210, and the global water return channel 260 do not normally form a closed circuit, which is practically impossible in continuous operation since condensate is continuously entrained in the flow of cooling-water. Accordingly, it is understood that the water return channel 260 may typically include an open water reservoir or alternative (open) return path for cooling-water. In one embodiment featuring an alternative return path, for instance, the common water supply unit 240 may draw its water from the water mains at the greenhouse 100, while the at least one dehumidifying unit 210 may discharge its used cooling-water into the sewer; the return path then traces through a conventional (drinking) water cycle.

In one embodiment, the common water supply unit 240 may merely include a pump, e.g. a water well pump or a surface water pump, that draws suitably cool water from a water well or a surface water source, e.g. a lake or river. In a preferred embodiment, however, the common water supply unit 240 may additionally include water cooling means for cooling-water to below the dewpoint of the greenhouse air before supplying it to the at least one dehumidifying unit 210. In one such embodiment, for instance, the water cooling means may include a cooling tower. In another embodiment, the common water supply unit may include an in itself conventional thermally and/or electrically powered heat pump of any suitable type. A heat pump may be less dependent on the outside temperature, and offer an extra advantage over a cooling tower in that it requires less or no air to be displaced. The water cooling means may preferably be configured to be connected to a local, thermodynamically efficient cogeneration plant; most green house complexes have such a plant available as they depend on it for their energy requirements

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

### List of elements

| | | |
|---|---|---|
| 100 | greenhouse | |
| 102 | dehumidifying location | |
| 200 | system | |
| 210 | dehumidifying unit | |
| 212 | heat exchanger | |
| 213 | main air channel / conduit | main air flow path |
| 213a,b | air inlet (a) and air outlet (b) | air flow path starting point (a) and end point (b) |
| 214 | primary air channel section | primary air flow path section |
| 216 | secondary air channel section | secondary air flow path section |
| 218 | tertiary air channel section | tertiary air flow path section |
| 220 | bypass air channel section (for primary air channel section) | |
| 222 | bypass valve | |
| 224 | bypass air channel section (for tertiary air channel section) | |
| 226 | bypass valve | |
| 228 | air pump | |
| 230 | air-water interfacer | air-water interface region |
| 231 | main water channel / conduit | main water flow path |
| 231a,b | water inlet (a) and outlet (b) | water flow path starting point (a) and end point (b) |
| 232 | primary water channel section | primary water flow path section |
| 234 | loopback water channel section | |
| 236 | loopback valve | |
| 240 | common water supply unit | |
| 242 | cooling-water outlet | |
| 244 | water inlet | |
| 246 | water pump | |
| 250 | global water supply channel | global water supply path |
| 260 | global water return channel | global water return path |
| 270 | open water reservoir | open return path |

## Claims

1. A system (200) for dehumidifying greenhouse air, comprising:
● at least one local dehumidifying unit (210), comprising:
o an air channel network including main air channel (213) that extends from an air inlet (213a) to an air outlet (213b), and that successively includes a primary air channel section (214), a secondary air channel section (216), and a tertiary air channel section (218);
o an air pump (228) that is arranged inside the main air channel (213) and configured to effect a flow of greenhouse air therethrough;
o a water channel network including a main water channel (231) that extends from a water inlet (231a) to a water outlet (231b), and that includes a primary water channel section (232);
o a heat exchanger (212) in which said primary and tertiary air channel sections (214, 218) are arranged in heat exchanging contact;
o an air-water interfacer (230) in which said secondary air channel section (216) and said primary water channel section (232) are in fluid communication; and
● a common water supply unit (240) configured to provide for a flow of cooling-water, and including at least one cooling-water outlet (242) that is operably connected to the water inlet (231a) of the at least one local dehumidifier (210).

2. The system according to claim 1, wherein the air-water interfacer (230) includes a packed bed configured to bring the flow cooling-water through the main water channel (231) into fluid exchanging contact with the flow of greenhouse air through the main air channel (213).

3. The system according to claim 1 or 2, wherein the air-water interfacer (230) includes a water atomizer that is arranged in the primary water channel section (232), upstream of an air-water interface region, and that is configured to atomize the flow of cooling-water through the primary water channel section to as to inject a mist of cooling-water droplets in said air-water interface region, and
wherein secondary air channel section (216) through the air water interfacer (230) is configured such that the flow of greenhouse air is led through the mist of cooling-water droplets in said air-water interface region.

4. The system according to any of the claims 1-3, wherein the air pump (228) is arranged in between the primary and tertiary air channel sections (214, 218).

5. The system according to any of the claims 1-4, wherein the air channel network further includes:
● at least one bypass air channel section (220, 224) that branches off from the main air channel (213) to extend around the heat exchanger (212) and to eventually rejoin the main air channel (213), and that provides for a bypass around one of the primary air channel section (214) and the tertiary air channel section (218);
● at least one bypass valve (222, 226), associated with the bypass air channel section (220, 224), and configured to enable the flow of greenhouse air through the main air channel (213) to be alternatively switched between the bypassed air channel section (214, 218) and the bypass air channel section (220, 224).

6. The system according to claim 5, wherein the air channel network includes two bypass air channel sections (200, 224) that provide for respective bypasses around the primary and tertiary air channel sections (214, 218), each bypass air channel section (200, 224) being associated with a respective bypass valve (226, 236) that is configured to enable the flow of greenhouse air through the main air channel (213) to be alternatively switched between the respective bypassed air channel section (214, 218) and the respective bypass air channel section (220, 224).

7. The system according to any of the claims 1-6, wherein the heat exchanger (212) is a counter-flow heat exchanger.

8. The system according to any of the claims 1-7, wherein the water channel network further includes:
● at least one loopback water channel section (234) that branches off from the main water channel (231) at a point downstream of the air-water interfacer (230) and that rejoins the main water channel (231) at a point upstream of the air-water interfacer; and
● at least one loopback valve (236), associated with the loopback water channel section (234), and configured to enable the flow of cooling-water through the main water channel (231) exiting the air-water interfacer (230) to be alternatively looped back into the air-water interfacer (230) via the loopback water channel section (234) or discharged to the water outlet (231b) of the main water channel (231).

9. A greenhouse (100) provided with a system (200) according to any of the claims 1-8, wherein a plurality of local dehumidifying units (210) are arranged throughout the greenhouse (100) at spaced apart dehumidifying locations (102), all said dehumidifying units (210) being operably connected to a single common water supply unit (240).

10. A method for dehumidifying greenhouse air, comprising:
● at a dehumidifying location (102) in a green house (100), effecting a local flow of greenhouse air along a main air flow path (213) extending from an air flow path starting point (213a) located inside the green house to an air flow path end point (213b) located inside the greenhouse, and, in between said air flow path starting and end points (213a, 213b), successively including a primary air flow path section (214), a secondary air flow path section (216), and a tertiary air flow path section (218),
wherein greenhouse air flowing along the primary air flow path section (214) is in heat exchanging contact with air flowing along the tertiary air flow path section (218); and
● at said dehumidifying location (102), effecting a flow of cooling-water along a main water flow path (231) defining an air-water interface region (230) where cooling-water flowing along the main water flow path (231) is in fluid exchanging contact with greenhouse air flowing along the secondary air flow path section (216).

11. The method according to claim 10, wherein cooling-water entering the air-water interface region (230) has a temperature below a dewpoint of the greenhouse air entering the air-water interface region (230), such that their mutual fluid exchanging contact in the air-water interface region effects condensation of water present in the greenhouse air, and entrainment of the condensate in the flow of cooling-water.

12. The method according to claim 10 or 11, wherein cooling-water and greenhouse air in the air-water interface (230) region are in fluid exchanging communication through a packed bed.

13. The method according to any of the claims 10-12, further comprising:
● in or just upstream of said air-water interface region (230) atomizing the flow of cooling-water, such that, in said air-water interface region, greenhouse air flows through a mist of cooling-water droplets, said droplets preferably having an average diameter less than 50 µm.

14. The method according to any of the claims 10-13, comprising:
● at a plurality of spaced apart dehumidifying locations (102) in the greenhouse (100), effecting respective local flows of air along respective main air flow paths (213), each main air flow path extending from an air flow path starting point (213a) located inside the green house to an air flow path end point (213b) located inside the greenhouse, and, in between said air flow path starting and end points (213a, 213b), successively including a primary air flow path section (214), a secondary air flow path section (216), and a tertiary air flow path section (218),
wherein, for each respective main air flow path (213), air flowing along the primary air flow path section (214) is in heat exchanging contact with air flowing along the tertiary air flow path section (218);
● at said plurality of spaced apart dehumidifying locations (102), effecting respective flows of cooling-water along respective main water flow paths (231), each local water flow path defining an air-water interface region (230) where cooling-water flowing along the respective local water flow path is in fluid exchanging contact with greenhouse air flowing along the secondary air flow path section (216) of the respective main air flow path (213); and
● from a common location, supplying flows of cooling-water to the respective dehumidifying locations (102) along respective global water supply paths (250) that form upstream extensions of the respective local main water flow paths (231).
